# EUROPEAN PATENT APPLICATION

(11) **EP 1 331 182 A1**
(43) Date of publication of application: **30.07.2003**
(21) Application number: 02024121.2
(22) Date of filing: 25.10.2002
(51) Int. Cl.: B65G 51/03, B65G 21/20

(54) **Positioning system of conveyor guides**

(30) Priority: 02.11.2001 EP 01830681
(71) Applicant: Rexnord Marbett S.p.A., 42015 Correggio (Reggio Emilia) (IT)
(72) Inventor: Andreoli, Andrea, 41010 Villanova (MO) (IT); Bellini, Emanuele, 41037 Mirandola (MO) (IT)
(74) Representative: Prins, Adrianus Willem

(57) **Abstract**

A positioning system of guide elements of a conveyor of articles comprises: at least one guide positioning unit (**131;133**) comprising a guide positioning element (**303,305;403,405**) adapted to be operatively associated with a respective guide element (**135**) for the positioning thereof; a system of traction-transmitting cables (**137**) operatively associated with the guide positioning unit, for transmitting traction forces; at least one traction unit (**131;133**) associated with the system of traction-transmitting cables for exerting traction forces on the system of traction-transmitting cables. The guide positioning unit is either a driven guide positioning unit (**133**), wherein the guide positioning element (**303,305**) is caused to be moved by the traction forces transmitted by the system of traction-transmitting cables, or a driving guide positioning unit (**131**), comprising a motor group (**301**) associated with the guide positioning element. The system of traction-transmitting cables comprises, in the case of a driving unit, at least one traction-transmitting cable (**167,167b,167c,167d**) for transmitting traction forces between the traction unit and the driving unit; in the case of a driven unit, the system of traction-transmitting cables comprises at least one first traction-transmitting cable (**167a,167b;167d,167e**) and at least one second traction-transmitting cable (**167c,167d;167b;167f**) for transmitting respective first and second traction forces, respectively causing the guide positioning element to be moved in a first direction and in a second direction.

## Description

The present invention relates in general to the field of conveyors of articles, for instance belt conveyors, chain conveyors and pneumatic conveyors. More specifically, the invention concerns a positioning system of guide elements of a conveyor, such as guide elements for containing, routing, sustaining the transported articles.

In conveyors of articles, systems of guide elements are generally provided for containing and guaranteeing the correct routing of the transported articles in their movement along the transport path; guide elements may also be provided for sustaining the transported articles during their movement. Several typologies of guide elements exist, depending on the type of conveyor they are associated with.

A same conveyor can be employed for transporting articles of different nature, different spatial configuration, or also simply articles of similar nature but of different dimensions.

In order to adapt a conveyor to the transport of different types of articles, for example to assure the correct routing thereof, it may be necessary to adjust the position of the containment guide elements.

Let for example the case be considered of a pneumatic conveyor, of the type widely used for transporting plastic (typically PET) bottles from a production station to a following filling station of the bottles with the desired liquids, drinks or other.

Such a conveyor includes a chamber run through by a high-speed air flow. The chamber extends along a transport path of the bottles, for sections of typical length equal to thirty, forty or even fifty meters.

The chamber is open at the bottom and it is adapted to receive therein the terminal portion of the neck of the bottles. The high-speed air flow running through the chamber, striking the terminal portion of the neck of the bottles, imparts thereto a thrust in the desired direction, determining the movement thereof along the transport path.

In such a movement, the bottles are sustained by a pair of support guides, placed in correspondence of the bottom opening of the chamber and extending parallelly one in front of the other along the transport path. Such support guides act as supports for a support collar projecting from the terminal portion of the neck of every bottle. The bottles are thus transported by the flow of air while being hung to the support guides through the respective support collars.

In the movement along the transport path it is important that the bottles are maintained in a substantially vertical position. This allows avoiding that, because of rockings of the bottles, especially occurring in correspondence of curved sections of the transport path, the support collar stops on the support guides causing undesired stops of the bottle and, consequently, of the whole train of following bottles.

To assure that the bottles are maintained in a substantially vertical position, a pair of lateral containment guides is provided. The containment guides extend parallelly to each other along the transport path, at a lower height with respect to the two support guides. Typically, the two containment guides are placed at a height corresponding to the substantially cylindrical portion of maximum diameter of the bottles.

Generally, the two lateral containment guides are formed by bars of metallic or synthetic material, supported by clamps arranged in longitudinal periodic succession along the guides, for instance at regular intervals of about 50 cm. The clamps are provided with tangs that allow fixing the clamps to respective supports mounted on brackets that, being fixed to the chamber, extend downward therefrom.

To perform their function, the two containment guides must be kept in contact to, or at least they have to graze, the body of the bottles. Clearly, if the two guides are too close to each other, the friction they exert on the body of the bottles may unacceptably scrape the bottle body and even prevent the bottles from moving; on the contrary, if the two guides are too far apart, they cannot prevent the undesired rockings of the bottles.

Since the conveyor has to allow the transport of bottles of different diameter, for instance bottles of 1 lt, 1,5 lt and 2 lt, it must be possible to adjust the position of the two containment guides transversally to the transport path.

To such end, the coupling of the tangs of the clamps to the respective supports is manually adjustable by loosening screws or similar tightening means: acting on these screws loosening them, the tang of the clamp is released. Then, by making the tang of the clamp slide with respect to the respective support, the position of a section of the containment guide can be varied.

To adjust the position of the containment guides, the presence of one or more human operators is needed, which have to adjust the position of every support clamp of the guides. It is easy to realize that this operation is both complicated and extremely long, especially considering that in a transport line of approximately 50 m the number of guide support clamps is of the order of some hundreds. The time required to complete the adjustment operation, that is actually a dead time for the transport line, has a non-negligible impact on the overall manufacturing cost. In addition, the operation is prone to errors that, where not identified before the conveyor is started, can determine an irregular transport of articles, or even the stop of the whole transport line.

As far as the Applicant is aware, a pneumatic conveyor of plastic bottles is known in which the adjustment of the position of the containment guides, rather than being manual, is entrusted to pneumatic actuators. Each support clamp of the containment guides has associated thereto a respective actuator, enabling the movement of the support clamp transversally to the transport path.

It is clear that such a solution, if from one hand eliminates the necessity of a manual intervention for the adjustment of the positions of the guides, thereby reducing the dead times of the transport line, on the other hand impacts substantially on the overall cost of the conveyor and significantly increases the complexity thereof, since several hundreds of pneumatic cylinder-piston assemblies are required.

In addition to this, as in the case of the manual adjustment, it is not guaranteed that all the support clamps are moved of a same distance, with the consequence that the distance between the containment guides is not constant along the transport path. Even worse, it is not possible to assure a synchronous intervention of all the different cylinder-piston assemblies, so that some sections of the guides may move before others sections; the cylinder-piston assemblies may thus experience radial loads that may cause blocking of the pistons.

The cited example of pneumatic conveyor of plastic bottles exemplifies the problems that are generally posed by the operations of setting up a conveyor of articles so as to adapt it to the transport of articles of different nature, spatial conformation or dimensions.

In view of the state of the art outlined, it has been an object of the present invention to provide a positioning system of guide elements of a conveyor of articles that solved the aforementioned problems.

According to the present invention, a positioning system of guide elements of a conveyor of articles according to claim 1 is therefore provided.

Briefly stated, the guide positioning system comprises at least one guide positioning unit comprising a guide positioning element adapted to be operatively associated with a respective guide element for the positioning thereof.

A system of traction-transmitting cables is provided, operatively associated with the at least one guide positioning unit, for transmitting traction forces.

At least one traction unit is additionally associated with the system of traction-transmitting cables for exerting traction forces on the system of traction-transmitting cables.

The at least one guide positioning unit is one among a driven guide positioning unit, wherein the guide positioning element is caused to be moved by the traction forces transmitted by the system of traction-transmitting cables, and a driving guide positioning unit, comprising a motor group associated with the guide positioning element.

The system of traction-transmitting cables comprises, in the case of a driving unit, at least one traction-transmitting cable for transmitting traction forces between the traction unit and the at least one guide positioning unit, and, in the case of a driven unit, at least one first traction-transmitting cable and at least one second traction-transmitting cable for transmitting respective first and second traction forces, respectively causing the guide positioning element to be moved in a first direction and in a second direction.

Thanks to the positioning system according to the present invention, the operations of adjustment of the position of the guide elements of a conveyor are greatly simplified, being rendered substantially automatic. The dead times are therefore drastically reduced, with consequent increase of productivity. Additionally, the risks of committing errors in the adjustment operation are substantially eliminated.

The features and advantages of the present invention will be made evident by the following detailed description of some possible embodiments thereof, description that is however provided purely by way of non-limitative example making reference to the attached drawings, in which:
FIG. 1 is a view in axonometry of a section of a conveyor of articles, particularly a pneumatic conveyor for transporting plastic bottles, for greater clarity only partially assembled, equipped with a guide positioning system according to an embodiment of the present invention, particularly a positioning system of lateral containment guides for the transported bottles;
FIG. 2 is a view of the conveyor of FIG. 1 sectioned along a plane transversal thereto, completed with the parts missing in FIG. 1;
FIG. 3A is a front view in axonometry of a driving or active unit of the positioning system shown in FIG. 1;
FIG. 3B is a bottom view in axonometry of the active unit shown in FIG. 3A;
FIG. 3C is a rear view in axonometry of the active unit of FIGS. 3A and 3B;
FIG. 4A is a lateral view in axonometry of a driven or passive unit of the positioning system of FIG. 1;
FIG. 4B is a rear view in axonometry of the passive unit of FIG. 4A;
FIG. 5 shows the detail of a bowden cable-tensioning element of the conveyor of FIG. 1;
FIG. 6 is a view in transversal section of a part of the active unit of FIGS. 3A, 3B and 3C;
FIG. 7 is a top-plan view of a part of the active unit of FIGS. 3A, 3B and 3C, with associated limit stop means;
FIG. 8 is a top-plan view similar to that of FIG. 7, in which the active unit has associated therewith alternative limit stop means; and
FIG. 9 is a schematic view from below of a section of the conveyor of FIG. 1, with guide position control elements according to an embodiment of the present invention.

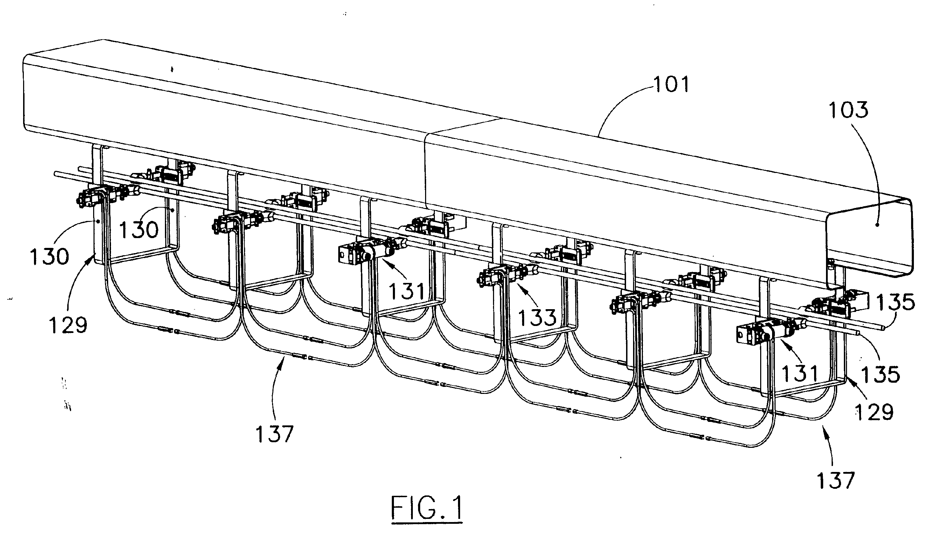

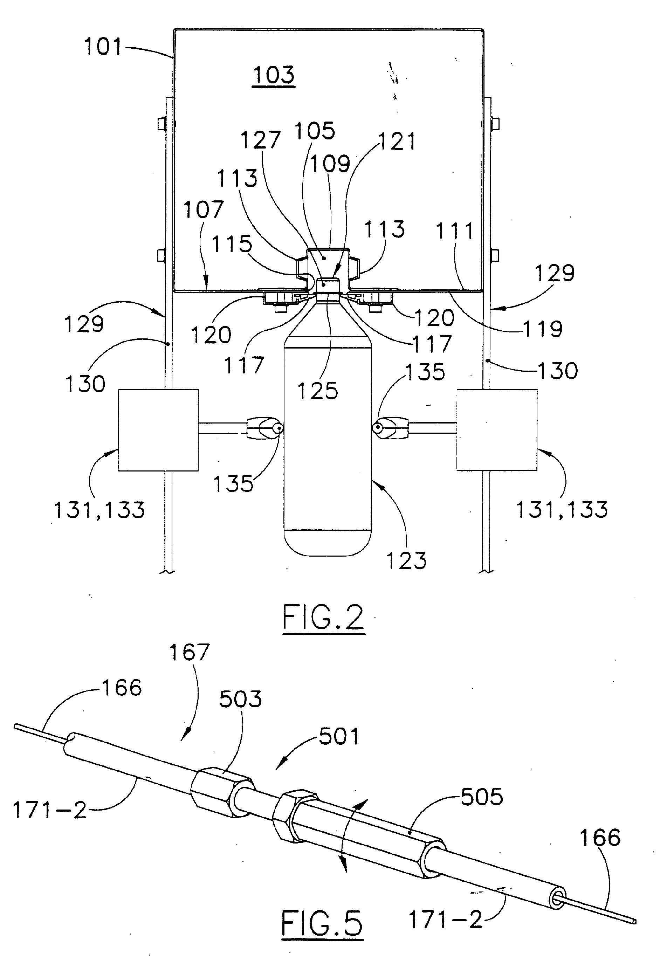

With reference to the drawings, in FIG. 1 there is shown in axonometric view a section of a pneumatic conveyor, particularly a pneumatic conveyor of the type used for transporting plastic bottles. The conveyor can for instance be part of a production line comprising a manufacturing station of the bottles, typically a station of blow moulding, and a filling station of the bottles with the prescribed liquids, drinks or other. The conveyor has therefore the function of transporting the bottles exiting from the manufacturing station to the filling station. For greater clarity, the pneumatic conveyor shown in FIG. 1 is partially assembled, lacking of some parts that are instead shown in FIG. 2. This latter is a view of the conveyor of FIG. 1 in section along a plane transversal thereto.

Referring jointly to FIGS. 1 and 2, the conveyor comprises a box-shaped casing **101**, in the shown example having generically rectangular transversal cross-section, extending along a transport path of the bottles. The box-shaped casing **101** defines at the interior thereof a duct **103.** The duct **103** is intended to be run through by a flow of air at high pressure, for instance produced by one or more electro-fans, not shown in the drawings, placed for example in correspondence of one end of the duct **103** upstream of the transport path, or distributed along the transport path.

As visible in FIG. 2, inside the box-shaped casing **101** a chamber **105** of substantially smaller dimensions is obtained. The chamber **105** extends, in correspondence of the bottom wall **107** of the box-shaped casing **101**, for the whole transport path. The chamber **105** is delimited laterally and above by a profiled section **109** fixed to the inner side **111** of the bottom wall **107**.

Along the profiled section **109** air collectors **113** are formed which allow the flow of air running through the duct **103** penetrating into the chamber **105**. The chamber **105** results in this way run through by a flow of air at high speed.

In the bottom wall **107** of the box-shaped casing **101**, substantially in central position thereof, an opening **115** is formed extending along the whole transport path. The profiled section **109** is attached to the bottom wall **107** of the box-shaped casing **101** in correspondence of such an opening **115**, so that the chamber **105** results open at the bottom. To each one of the two major sides of the opening **115** there is associated a respective support guide **117**, extending for the whole transport path. The support guides **117** are mounted on an outer side **119** of the bottom wall **107** by means of respective brackets **120**.

The two support guides **117** define therebetween a gap of dimension adapted to the passage substantially without interference of necks **121** of transported bottles **123**, at the same time providing a support for a support collar **125** projecting radially from the neck **121** of each bottle **123.** The support collar **125** is conventionally formed in intermediate position along the neck **121** of the bottle, so that a terminal portion **127** of the neck extends into the chamber **105** and is stroke by the high-speed air flow running through the chamber **105**.

The bottles **123** are in this way transported along the transport path suspended to the support guides **117** through the respective support collars **125**, by the action of the high-speed air flow that runs through the chamber **105** and strikes the respective terminal portions **127** of the necks **121**.

A plurality of brackets **129** is arranged in preferably periodic succession along the transport path. The brackets **129** are attached, at the two free ends thereof, to the box-shaped casing **101**, and extend downward. Through respective vertical rods **130**, each bracket **129** provides a support for a respective pair of active guide positioning units **131** or passive guide positioning units **133** of a positioning system according to an embodiment of the invention, for positioning of a pair of lateral containment guides **135.** The containment guides **135** are for instance constituted by a pair of bars, in metal or in synthetic material or other suitable low-friction material, that extend parallelly to each other along the transport path at a lower height compared to the support guides **117** ,for instance at a height corresponding to that at which the substantially cylindrical portion of maximum diameter of the bottles **123** is located. The two guides **135** mainly have the function of keeping the bottles **123** substantially vertical in their movement along the transport path, preventing rockings especially in correspondence of curved sections of the transport path. The active units **131** and the passive units **133** placed on a same side of the conveyor with respect to a median longitudinal plane thereof are operatively connected to each other through a respective system **137** of traction-transmitting cables, adapted to transmit traction forces, for instance bowden cables, as will be better described in the following. In a possible embodiment, not at all limitative, each bracket supports two active units **131** or two passive units **133**, which are placed one in front of the other. Alternatively, each bracket **129** can support an active unit **131** and a passive unit **133**.

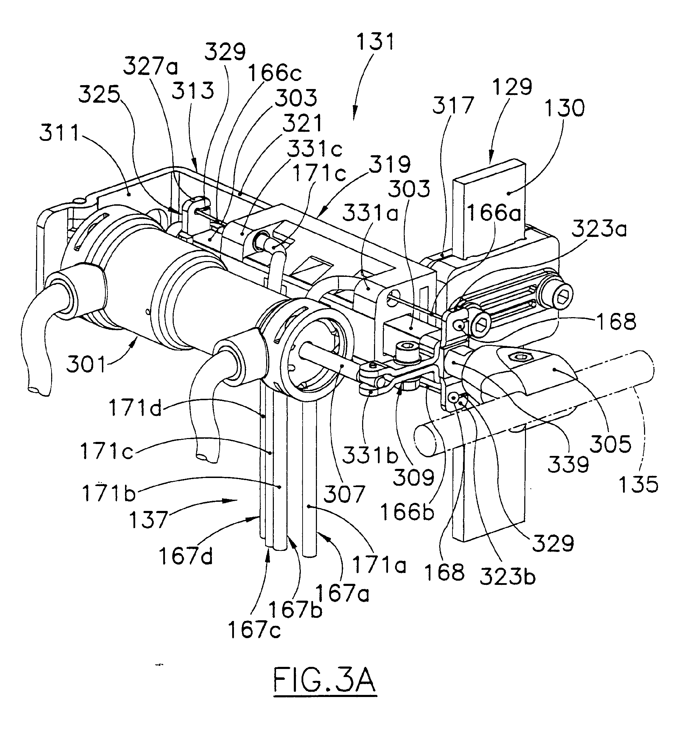

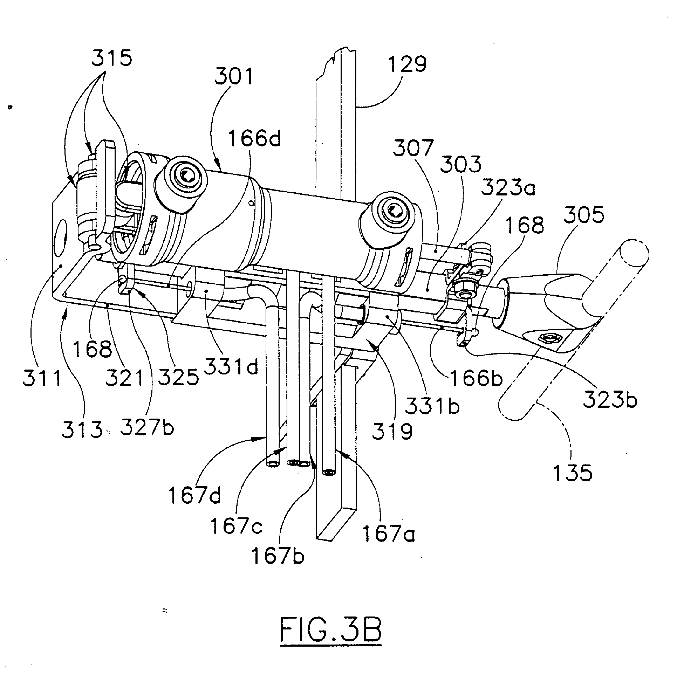

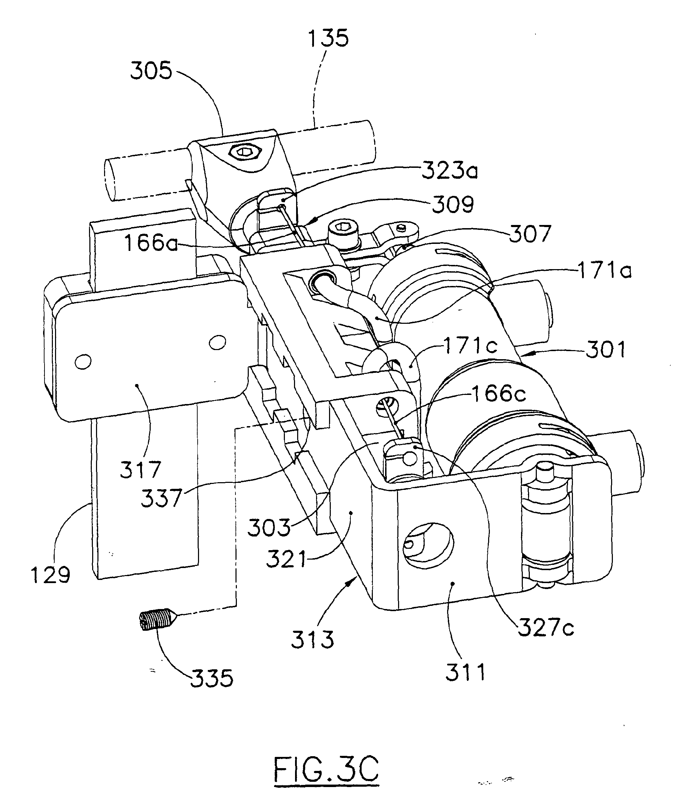

FIGS. **3A**, **3B** and **3C** show in detail the structure of a generic active unit **131**. The active unit **131** includes a motor group, for instance a cylinder-piston assembly **301,** *e.g.* of the pneumatic type, that controls a translation movement of a sliding member, *e.g.* a shaft **303.** A clamp **305** is associated with an end of the shaft **303** and is adapted to grasp one of the pair of a containment guides **135**. The shaft **303** is made to translate by a stem **307** of the cylinder-piston assembly **301**, joined to the shaft **303** by a clamp **309** tightened around the shaft **303** substantially in correspondence of an end thereof proximate to the containment guide **135**. Particularly, the shaft **303** and the stem **307** have respective axes lying in a same plane, in the shown example perpendicular to the vertical rod **130** of the respective bracket **129**, and a free end of the stem **307** is hinged, with rotation axis perpendicular to the aforementioned plane, to a fork formed by the bifurcation of two end portions of the clamp **309**. The cylinder-piston assembly **301** is coupled, at the side thereof opposite to the stem **307**, to a first wing **311** of an "S"-shaped support bracket **313**. Preferably, the coupling is obtained through an articulated joint **315**, for instance a universal joint, adapted to allow the movement of the cylinder-piston assembly in two planes perpendicular to each other: a first plane is the plane in which the axes of the stem **307** and of the shaft **303** lie, while a second plane is a plane perpendicular to the former one. This introduces the necessary degrees of freedom so that the stem **307** is always exclusively subject to compressive stresses, and not to radial stresses. A second wing **317** of the bracket **313** is mounted to the vertical rod **130** of the respective bracket **129,** through screws or similar attachment means, preferably such as to allow the adjustment of the attachment height along the vertical rod of the bracket **129**. The shaft **303** is slidably supported by a guide body **319**, in turn supported by the "S"-shaped bracket **313** to which the guide body is mounted slidably along a portion **321** intermediate to the two wings **311** and **317**.

The clamp **309** includes a pair of wings **323a**, **323b** transversal to the shaft **303**, particularly such as to extend, at opposite sides, perpendicularly to the plane in which both the axis of the shaft **303** and the axis of the stem **307** lie. In correspondence of one end of the shaft **303** distal from the containment guide **135**, a plate-like element **325** is mounted on the shaft **303**; the plate-like element **325** is provided with a pair of wings **327a** and **327b** also transversal to the shaft **303**. In particular, similarly to the wings **323a**, **323b** of the clamp **309**, the wings **327a**, **327b** of the plate-like element **325** extend perpendicularly and at opposite sides of the plane in which both the axis of the shaft **303** and the axis of the stem **307** lie.

In each of the wings **323a**, **323b**, **327a**, **327b** a notch **329** is provided for the insertion of an extremity portion of a respective cable core **166a**, **166b**, **166c**, **166d** of a respective bowden cable **167a**, **167b**, **167c**, **167d**, part of the system of bowden cables **137**. The extremity portion of each cable core **166a**, **166b**, **166c**, **166d** ends with a respective enlarged portion **168**, for instance a sphere formed over the cable core, of dimensions larger than the notch **329**.

The guide body **319** comprises four shoulders **331a**, **331b**, **331c**, **331d**. A first pair of shoulders **331a** and **331b** is located on the side of the proximal end of the shaft **303**, while a second pair of shoulders **331c** and **331d** is located on the side of the distal end of the shaft **303.** Each shoulder **331a, 331b, 331c, 331d** is provided with a through hole of dimensions adapted to allow the passage of a respective one of the cable cores **166a**, **166b**, **166c**, **166d** and of the associated extremity sphere **168**, but not of a respective cable sheath **171a**, **171b**, **171c**, **171d**: an end of the cable sheath, provided with a suitably flanged terminal, e.g. in metal, abuts against the entrance of the through hole.

The bowden cables **167a** and **167c** extend from the active unit **131** to a unit, indifferently passive or active, that precedes the active unit **131** along the transport path. The bowden cables **167b**and **167d** extend from the active unit **131** to a unit, indifferently active or passive, that follows the active unit **131** along the transport path.

Preferably, but not limitatively, the shaft **303**, and thus the coupling thereof to the guide body **319**, is prismatic and not cylindrical. This allows avoiding that the weight of the cylinder-piston assembly **301** causes a rotation of the shaft **303** around the axis thereof with respect to the guide body **319**, and therefore a misalignment of the stem **307**.

Still preferably, the clamp **305** is provided with an externally-threaded tang **339**, screwable within a threaded hole provided in the proximal end of the shaft **303**. This allows the interchangeability of the clamps **305**, making it possible to substitute a clamp of a given type with another type of clamp deemed more suitable in view of the particular application, without having to modify the structure of the active unit **131**. For instance, it is possible to associate to an active unit clamps having tangs **339** of different length.

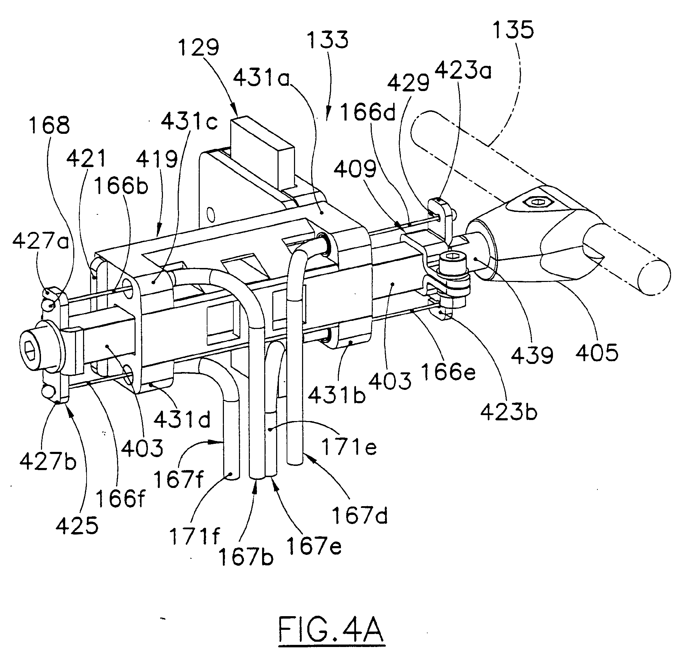

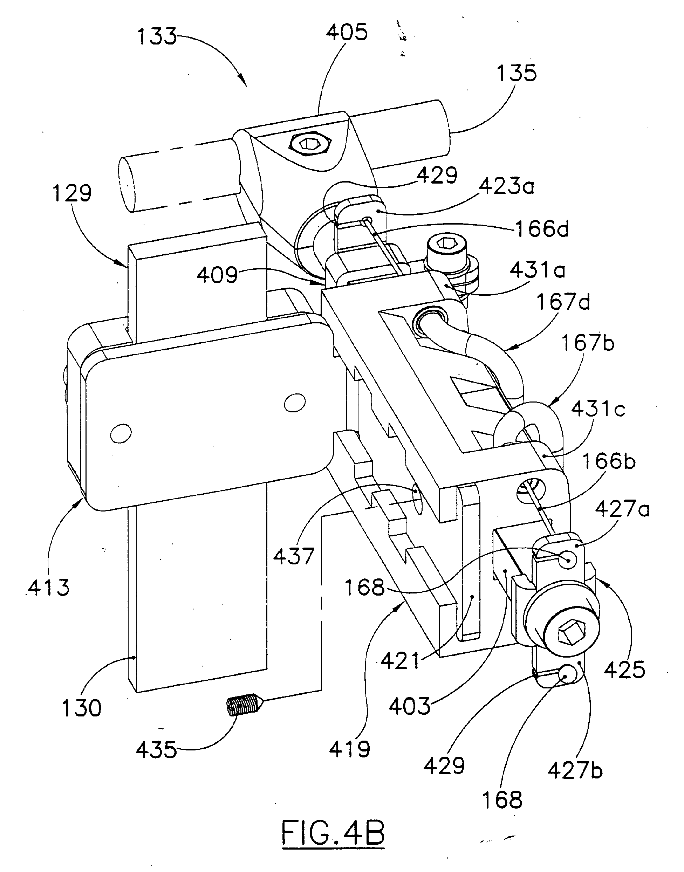

FIGS. **4A** and **4B** show in detail the structure of a generic passive unit **133**. Simpler than the active unit **131**, the passive unit **133** includes a sliding member, e.g. a shaft **403** to an end of which a clamp **405** is associated adapted to grasp the containment guide **135**. A clamp **409** is tightened around the shaft **403** substantially in correspondence of one end thereof proximal to the containment guide **135**. The shaft **403** is slidably supported by a guide body **419**, in turn supported by an "L"-shaped support bracket **413**, with a leg **421** to which the guide body **419** is slidably mounted and a base **417** mounted to the vertical rod of the respective bracket **129** by means of screws or similar attachment means; also in this case, the attachment of to the vertical rod is preferably such as to allow the adjustment of the attachment height along the vertical rod of the bracket **129**.

The clamp **409**, entirely similar to the clamp **309** of the active unit **131** except for the fact that the fork for hinging the stem **307** is not provided for, comprises a pair of wings **423a**, **423b** transversal to the shaft **403**, particularly such as to extend perpendicularly and at opposite sides of a plane in which both the axis of the shaft **303** and the axis of the containment guide **135** lie. In correspondence of one end of the shaft **403** distal from the containment guide **135**, a plate-like element **425** similar to the plate-like element **325** mounted on the shaft **303** of the active unit **131** is mounted on the shaft **403**. The plate-like element **425** is provided with a pair of wings **427a** and **427b** also transversal to the shaft **403**. In particular, the wings **427a**, **427b** of the plate-like element **425** extend in the same direction as the wings **423a**, **423b** of the clamp **409**.

In each wing **423a**, **423b**, **427a**, **427b** a notch **429** is provided, for the insertion of an extremity portion of a respective cable core of a bowden cable of the system of cables **137**. For instance, supposing that the passive unit **133** shown in FIGS. **4A** and **4B** is the unit that follows, along the transport path, the active unit **131** previously described, the notches **429** provided for in the wings **423a** and **427a** receive the terminal portions of the cable cores **166d** and **166b**, respectively, of the bowden cables **167d** and **167b** coming from the active unit **131**. The notches **429** in the wings **423b** and **427b** receive instead the terminal portions of two further cable cores **166e** and **166f** of bowden cables **167e** and **167f** of the system of cables **137**, that extend to a unit, indifferently passive or active, following the passive unit **133** along the transport path. The extremity portion of each cable core **166a, 166b, 166c, 166d** ends with a respective sphere **168** formed there over, of larger dimensions than the notch **429**.

The guide body **419** comprises four shoulders **431a**, **431b**, **431c**, **431d**. A first pair of shoulders **431a** and **431b** is located on the side of the proximal end of the shaft **403**, while a second pair of shoulders **431c** and **431d** is located on the side of the distal end of the shaft **403.** Each shoulder **431a**, **431b**, **431c**, **431d** is provided with a through hole of dimensions adapted to allow the passage of one of the cable cores **166b**, **166e**, **166d**, **166f** and of the associated extremity sphere **168** but not of a respective cable sheath **171b**, **171e**, **171d**, **171f**; an extremity of the cable sheath, provided with a metallic flanged terminal, abuts against the entrance of the through hole.

As in the case of the active unit **131** previously described, the clamp **405** is preferably provided with an externally-threaded tang **439**, screwable within a threaded hole provided in the proximal end of the shaft **403**.

Concerning the materials, the guide bodies **319**, **419** are preferably realized in low-friction plastic material, for instance acetalic resin. The support brackets **313**, **413** can be realized both in steel and in plastics. The shafts **303**, **403** are preferably realized in steel.

Making again reference to FIG. **1**, it is thus possible to note that in this embodiment of the invention each positioning unit of the containment guides **135**, be it an active unit **131** or a passive unit **133**, is connected, through a first pair of bowden cables, to the preceding positioning unit, indifferently active or passive, along the transport path and, through a second pair of bowden cables, to the following active or passive positioning unit along the transport path. In other words, a chain of interconnected guide positioning units is formed. The first guide positioning unit of the chain is connected only to the positioning unit, indifferently active or passive, following it along the transport path, while the last positioning unit of the chain is connected only to the preceding active or passive positioning unit.

In the active units **131**, the bowden cables **171a** and **171b**, whose respective cable cores **166a** and **166b** are anchored to the clamp **309**, allow transmitting the movement of advancement of the shaft **303**, determined by the extension of the stem **307**, to the adjacent active or passive units along the transport path: when the shaft **303** advances, the cable cores **166a** and **166b** are in fact submitted to traction. In the, e.g., passive unit **133** following the active unit **131** along the transport path, the traction of the cable core **166b** determines the advancement of the shaft **403**. The same happens in the active or passive unit that precedes the active unit **131** and that receives the movement through the traction of the cable core **166a**. In the passive unit **133,** the advancement of the shaft determines the traction of the cable core **166e**: in this way the passive unit **133** transmits in turn the movement to the following active or passive unit. In other words, the movement of advancement of the shaft of an active unit **131**, determined by the respective cylinder-piston assembly **301**, determines, by dragging through the cable cores of the bowden cables, the movement of advancement of the shafts of the adjacent active or passive units. These in turn, through the bowden cables, transmit the movement of advancement of the respective shafts to the units adjacent thereto, and so on. The containment guide **135** thus approaches to the median plane of the conveyor.

In a totally similar way, when the stem **307** of the active unit **131** moves back, the shaft **303** moves back, and the cable cores **166c** and **166d** of the bowden cables **167c** and **167d** are put in traction. In the passive unit **133** following the active unit **131** along the transport path, the traction of the cable core **166d** causes the shaft **403** to move back. The same happens in the active or passive unit that precedes the active unit **131** and that receives the movement through the traction of the cable core **166c**. In the passive unit **133**, the moving back of the shaft determines the traction of the cable core **166f**: in this way the passive unit **133** transmits in turn the motion to the following active or passive unit. Also in this case, the movement of withdrawal of the shaft of an active unit **131** determined by the respective cylinder-piston assembly **301** determines, by dragging through the cable cores of the bowden cables, the movement of withdrawal of the shafts of the adjacent active or passive units. These in turn, through the bowden cables, transmit the movement of withdrawal of the respective shafts to the units adjacent thereto, and so on. The containment guide **135** thus moves away from the median plane of the conveyor.

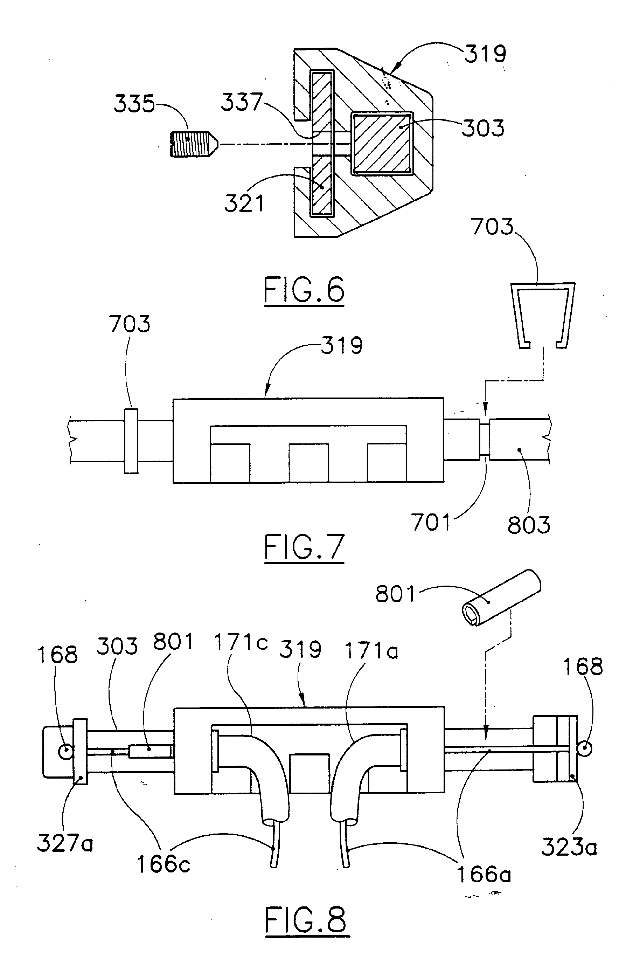

For a correct operation of the guide positioning system, the plays have to be substantially eliminated. The plays are eliminated by properly tensioning the bowden cables. To such end, according to an embodiment of the invention visible in FIG. **1** and, in magnified scale, in FIG. **5**, each bowden cable **167** of the system of cables **137** includes a continuous cable core **166** inserted in two half-sheaths **171_1, 171_2** connected to each other through a tensioning element **501.** The tensioning element **501** is, in the shown example, composed of a first bushing **503** mounted on the extremity of the half-sheath **171_1** and externally threaded, screw-joined to a second bushing **505** mounted on the extremity of the half-sheath **171_2** and internally threaded. Acting for example on the bushing **505** by screwing or unscrewing it, it is possible to properly tension the bowden cable **167**. Other types of arrangements for tensioning the Bowden cables can clearly be envisaged.

The installation of the guide positioning system according the described embodiment of the present invention is a simple operation. Firstly, the active **131** and passive units **133** are fixed to the vertical rods of the brackets **129**, at the desired height or heights. Then, the two guides **135** are fixed to the clamps **305** and **405**. The different active and passive units are then connected to each other through the bowden cables. The cable cores **166** are inserted into the respective pairs of half-sheaths **171_1**, **171_2**, the free extremities of the half-sheaths **171_1**, **171_2** are fixed to the shoulders **331a-d** and **431a-d** of the guide bodies **319**, **419** and the extremities of the cable cores are connected to the wings **323a**, **323b**, **423a**, **423b** of the clamps **309**, **409** or to the wings **327a**, **327b**, **427a**, **427b** of the plate-like elements **325**, **425**, having care to respect the connection criterion described above. This operation is rather simple, considering that each cable core must have an extremity connected to a unit **131** or **133** in correspondence of the side thereof facing the containment guide **135** and the opposite extremity connected to the adjacent unit **131** or **133** in correspondence of the side thereof opposed to the containment guide.

The plays are then eliminated. The shafts **303**, **403** of the different units are preferably blocked in a position intermediate to the two limit-stop positions. This can for instance be obtained using forks that are mounted astride the shafts **303**, **403** after having made the latter slide with respect to the guide bodies **319**, **419** until they are brought in the desired position. Alternatively, as shown in FIGS. **3C** and **4B**, blocking of the shafts **303** and **403** can be achieved using grub-screws **335** and **435**, screwable in threaded through holes **337** (FIG. **6**) and **437** provided for in the intermediate portion **321** of the support bracket **313** and, respectively, in the leg **421** of the support bracket **413**. The grub-screws **335** and **435** can in this way engage the shafts **303** and **403**, blocking them.

The cylinder-piston assemblies **301** of the active units **131** can be of the type having two operating positions of the stem, or of the type having three or more operating positions described in the European patent application No. 01830487.3 in the name of the present Applicant. Other types of motor group can however be used, for instance hydraulic cylinder-piston assemblies, electric motors, such as stepper motors or linear motors.

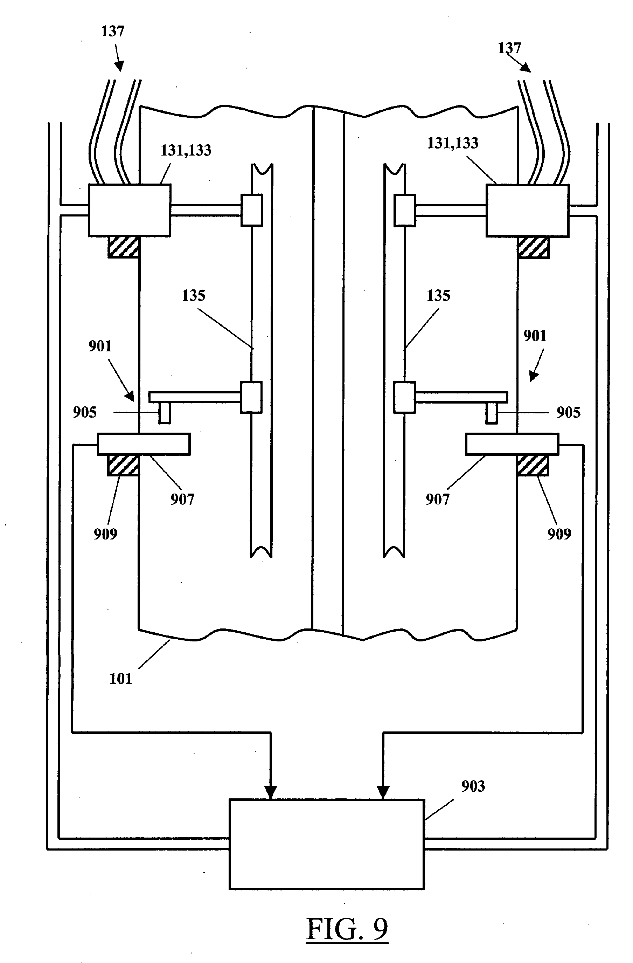

All the active units **131** are preferably subjected to the control of a same command unit (schematically shown in FIG. **9** and identified by **903**). For instance, in the case the motor groups are pneumatic cylinder-piston assemblies, the command unit, through a system of pipes, selectively feeds the cylinder-piston assemblies in the active units with fluid in pressure, for instance air.

If desired, it is possible to make the extreme positions taken by the containment guides differ from those that would be determined by the motor group of the active unit. As shown by way of example in FIG. **7**, this can for example be obtained simply mounting at least on the shafts **303** of the active units **131**, in suitable grooves **701** provided thereon, one or two forks **703**, upstream and downstream of the guide blocks **319**. In this a way, the two limit stops of the shafts of the active units are determined by the position of the forks longitudinally to the shafts **303**. Alternatively, as shown in FIG. **8**, a similar result can be obtained mounting on the extremities of the cable cores of the bowden cables **131** joined to the active units spacers **801**, in the example in form of cylinders, that limit the run of the shaft **303** acting as stop elements for the wings to which the extremities of the cable cores are hooked.

It is worth observing that any given guide positioning unit, be it active or passive, needs not necessarily be connected to units, active or passive, strictly adjacent thereto along the transport path. The connection scheme can in fact be of the most disparate, provided that the criterion is respected according to which a cable core that is connected at one end thereof to the proximal end of the shaft **303** or **403** of such unit must be connected, at the opposite end, to the distal end of the shaft **303** or **403** of the other unit.

As a further variation, along a same containment guide **135** more chains of active and passive guide positioning units can be provided, each chain having a separated system of traction-transmitting cables.

Additionally, a given active or passive unit can be also connected through traction-transmitting cables to more than two active or passive units. For example, instead of having the guide positioning units connected to each other in the cascade arrangement depicted in FIG. **1**, an active unit, in particular the active unit at one extreme of the chain, may be connected to every other positioning unit of the chain in a point-to-point connection scheme.

As already mentioned, in the embodiment of FIG. **1** the two active or passive units located at the extremities of a chain of guide positioning units are connected only to the active or passive unit that follows or precedes them along the transport path and associated with the same containment guide. In this way, the position of each of the two containment guides **135** is adjustable autonomously: one containment guide can be moved while the other one is held steady, or the two guides can be moved of different amounts. If one accepts to renounce to the possibility of autonomously adjusting the position of the two containment guides, it is possible to connect one, for example the last, active or passive unit along the transport path associated with one of the two guides to one, for example the last, unit of the transport path associated with the other guide, with the same criterion adopted for the connection to each other of the different units associated with a same guide: the cable core that is put in traction by the advancement of the shaft **303** (in case of an active unit) or **403** (in case of a passive unit) has to be connected at the opposite end thereof to the plate-like element **352** (active unit) or **425** (passive unit), while the cable core that is put in traction by the withdrawal of the shaft has to be connected at the opposite end thereof to the clamp **309** (active unit) or **409** (passive unit). The first one of the guide positioning units associated with one of the two guides may additionally be connected to the first one of the guide positioning units associated with the other guide, according to the same criterion. In this way a double closed loop of bowden cables is formed.

It is observed that particular arrangements of active and passive guide positioning units can be devised in which the provision of two traction-transmitting cables between each pair of active or passive units is not strictly necessary. For example, in a closed-loop topology, it is sufficient to place just one traction-transmitting cable between each pair of adjacent, active or passive units. The traction force propagates through the loop in one sense (*e.g.,* clockwise) for synchronously moving the two guides so as to, *e.g.,* bring the two guides closer to each other, and in the opposite sense (*e.g*., counter-clockwise) for synchronously moving the two guides so as to, *e.g.,* increasing the distance therebetween. In particular, the sense along which the traction force is propagated through the loop for, e.g., putting the two guides closer to each other depends on the how the ends of the cores of the bowden cables are connected to the guide positioning units. As another example, if two active units are provided in correspondence of the two ends of each chain of guide positioning units, a single bowden cable is sufficient to transmit to all the intermediate guide positioning units, active or passive, traction forces adapted to cause the synchronous movement of the guide in the two opposite senses. More generally, whenever one or more passive units are interposed between two active units (such as, for example, the two passive units **133** arranged between the first and the second active units **131** starting from the right side of FIG. **1**), a single bowden cable is sufficient to transmit to all the intermediate units traction forces adapted to cause the movement of the guide, synchronously for each section thereof, in the two opposite senses. As another example of configuration requiring a single bowden cable, the active or passive units associated with any one of the two guides may be connected by a closed-loop system of bowden cables, the two guide positioning units located at the extremities of a respective chain of guide positioning units being connected to each other by a bowden cable.

Several active and passive units can also be positioned at different heights from each other along the vertical rods of the support brackets.

In principle, a single active unit can be sufficient to drive all the passive units associated with a same containment guide or, in the case of closed-loop traction-transmitting cable topologies, with both the containment guides. The active unit behaves as a traction unit, exerting traction forces on the system of traction-transmitting cables for inducing the movement of the guides. The system of traction-transmitting cables may comprise one or two traction-transmitting cables between each each pair of positioning units, depending on the topology being open-loop or closed-loop. Nevertheless, in order to limit the stresses both on the active units and on the cable cores of the bowden cables, it is preferable to provide more than one active units, intercalated to the passive units; each active unit may be viewed as a traction unit. For instance, in the embodiment shown in FIG. **1**, every two passive units **133** an active unit **131** is provided for. It is in fact observed that after a bowden cable has been tensioned, in order to make the cable core slide within the respective sheath a friction force must be overcome; such a friction force arises for example from the fact that the cable core, once tensioned, adheres to the inner wall of the respective sheath. If the traction force exerted on one end of the cable core is not sufficient to overcome the friction force, the cable core does not slide within the respective sheath, and the movement is not propagated. The number of active units to be distributed along the transport path, and the power of the respective motor groups shall be determined on the basis of the overall friction force acting on the bowden cable cores, and on the strength thereof. It is observed that the traction unit or units need not necessarily be operatively coupled to the guide elements to be moved (i.e., the shafts of the traction unit or units need not necessarily be coupled to the guide element).

It is also observed that nothing prevents from using all active units; in this case, the provision of the traction-transmitting cables (one or two between each pair of units) allows synchronising the movement of the different active units. It is thus ensured that all the guide positioning units impart a substantially identical movement to the respective clamps, and thus the guides are equally moved along every section thereof.

The Applicant has also found that the friction force acting on the Bowden cable cores can be expediently exploited to avoid the necessity of providing mechanical stop elements and of keeping the motor groups of the active units powered in order to keep the guides in a desired position. As mentioned previously, if the bowden cables are properly tensioned (an operation already required for eliminating undesired plays), in order to make the cable cores slide within the respective sheaths a traction force must be applied to the cables cores higher than the friction force acting on the cable cores. In view of this, when the motor groups of the active units are not powered, the guides remain in the position they currently are. By controlling the powering of the motor groups *(e.g.,* controlling the feed of air in pressure to the pneumatic cylinder-piston groups, or the current supplied to the electric motors) it is possible to move the guides to a desired position; once the desired position is reached, the powering of the motor groups can interrupted, and the guides remain in that position.

FIG. **9** schematically shows from below a section of the conveyor of FIG. **1** equipped with a guide positioning system according to an embodiment of the present invention, in which guide position detectors **901,** such as mechanically-actuated switches, proximity sensors, or encoders, are used to provide an indication of the guide position; the guide position indication provided by the guide position detectors **901** is exploited by the command unit **903** controlling the powering of the motor groups of the active units **131**; when the desired guide position is reached, the command unit **903** may interrupt the powering of the motor groups (for example, closing an electrovalve). For example, the guide position detectors may comprise a movable element **905**, movable together with a respective one of the guides **135**, for example mounted on the guide, and a fixed element **907**, steady with respect to the guide, for example mounted on a bracket **909** similar to the brackets **129**. In particular, the use of an encoder allows having a continuous range of admissible positions for the guides.

Thanks to the present invention, the positioning of the side containment guides of the conveyor is not entrusted to a manual intervention and it is consequently fast, easy and precise.

The positioning system according to the present invention has a reasonable cost, since a limited number of active units may be sufficient. Particularly, the cost of the positioning system according to the present invention can be kept substantially lower with respect to that of the positioning system cited in the introduction of the present description, comprising at least one pneumatic cylinder-piston assembly for each support clamp of the containment guides.

The provision of the system of traction-transmitting cables ensures synchronicity between the different positioning units, be they active or passive.

The positioning system according to the present invention is also less critic from the viewpoint of problems of misalignment of the different shafts of the active and passive units, deriving from manufacturing tolerances and from inaccuracies in the assemblage of the several parts composing it. In particularly, possible misalignments do not cause blocking of the motor groups of the active units.

If in the conveyor it is necessary to provide more pairs of containment guides **135**, placed at different heights, it suffices to provide on each vertical rod **130**, at different heights, as many active or passive units as the pairs of containment guides. If the position of the different pairs of containment guides needs to be autonomously adjustable, the active and passive units associated with a pair of containment guides will not be connected through bowden cables to the active or passive units associated with the other pairs of containment guides. If instead the position of the different pairs of containment guides can be adjusted simultaneously, the active or passive units associated with a pair of containment guides are connected through bowden cables to the active and passive units associated with the other pairs of containment guides. For example, let it be assumed that two pairs of containment guides are provided, placed at different heights with respect to the box-shaped casing **101**. On each vertical rod **130** two active units or two passive units, or also an active unit and a passive unit can be mounted, at different heights. One of such units can transmit the motion, through bowden cables, to the other unit placed at a different height, which will then transmit the motion to an adjacent unit along the transport path.

Although described with reference to the positioning of the containment guides of a pneumatic conveyor of plastic bottles, the present invention can also be applied to the positioning of the support guides **117** and can find in general application within the positioning of guide elements in conveyors of any typology, for instance belt or chain conveyors.

The present invention has been here described in terms of some possible embodiments thereof. It is clear that the persons skilled in the art can bring several changes to the embodiments described, as well as conceive other embodiments of the present invention, without for this departing from the scope of the invention defined in the appended claims.

For example, different types of coupling of the Bowden cables to the active/passive units and different arrangements for converting the traction forces transmitted by the Bowden cables into a translation movement of the clamps can be envisaged.

## Claims

1. A positioning system of guide elements of a conveyor of articles, comprising:
at least one guide positioning unit (**131;133**) comprising a guide positioning element (**303,305;403,405**) adapted to be operatively associated with a respective guide element (**135**) for the positioning thereof,
**characterised by** comprising
a system of traction-transmitting cables (**137**) operatively associated with the at least one guide positioning unit, for transmitting traction forces;
at least one traction unit (**131;133**) associated with the system of traction-transmitting cables for exerting traction forces on the system of traction-transmitting cables;
the at least one guide positioning unit being one among a driven guide positioning unit (**133**), wherein the guide positioning element (**303,305**) is caused to be moved by the traction forces transmitted by the system of traction-transmitting cables, and a driving guide positioning unit (**131**), comprising a motor group (**301**) associated with the guide positioning element;
the system of traction-transmitting cables comprising:
in case the at least one guide positioning unit is a driving unit, at least one traction-transmitting cable (**167,167b,167c,167d**) for transmitting traction forces between the traction unit and the at least one guide positioning unit, and
in case the at least one guide positioning unit is a driven unit, at least one first traction-transmitting cable (**167a,167b;167d,167e**) and at least one second traction-transmitting cable **(167c,167d;167b;167f)** for transmitting respective first and second traction forces, respectively causing the guide positioning element to be moved in a first direction and in a second direction.

2. The guide positioning system of claim 1, in which the at least one traction unit is a driving guide positioning unit.

3. The guide positioning system of claim 1 or 2, in which the at least one guide positioning unit comprises at least two guide positioning units, operatively coupled to each other through at least one traction-transmitting cable for transmitting traction forces between the at least two guide positioning units.

4. The guide positioning system of claim 3, in which the at least two guide positioning units are driven units, a first guide positioning unit being coupled to the traction unit through the at least one first traction-transmitting cable, and a second guide positioning unit being coupled to the traction unit through the at least one second traction-transmitting cable.

5. The guide positioning system of claim 3, in which the at least two guide positioning units are driven units, a first guide positioning unit being coupled to the traction unit through the at least one first and the at least one second traction-transmitting cables, the at least two guide positioning units being coupled to each other through at least two traction-transmitting cables.

6. The guide positioning system of claim 3, in which the at least two guide positioning units are driving units, a first guide positioning unit being coupled to the traction unit through the at least one traction-transmitting cable.

7. The guide positioning system of any one of claims 3 to 6, in which the at least one traction unit comprises at least two traction units.

8. The guide positioning system of claim 7, in which the at least two traction units are intercalated to the at least two guide positioning units.

9. The guide positioning system of any one of the preceding claims, in which the guide positioning element comprises a sliding member (**303;403**) adapted to be coupled to the respective guide element.

10. The guide positioning system of claim 9, in which the sliding member of a driven guide positioning unit is operatively coupled to respective extremities (**168**) of the first and second traction-transmitting cables, and is caused to slide by the action of the first or of the second traction forces.

11. The guide positioning system of claim 9, in which the sliding member of a driving guide positioning unit is operatively coupled to an extremity (**168**) of the at least one traction-transmitting cable, and is caused to slide by a combined action of the motor group and the traction forces transmitted by the at least one traction-transmitting cable.

12. The guide positioning system of any one of the preceding claims, in which the motor group comprises one among a cylinder-piston assembly operated by a fluid in pressure and an electric motor.

13. The guide positioning system of any one of the preceding claims, further comprising a guide element position detector (**901**) adapted to be operatively associated to the guide elements, and a command unit (**903**) controlling the at least one traction unit, the guide element position detector providing an indication of a position of the guide elements to a command unit.

14. The guide positioning system of any one of the preceding claims, in which the system of traction-transmitting cables is a system of bowden cables.

15. A positioning system of guide elements of a conveyor of articles, comprising at least one driving unit (**131**) and at least one driven unit (**133**), at least the driven unit being operatively associated with a guide element (**135**) of the conveyor for the positioning thereof, and being driven by the driving unit through a system of traction-transmitting cables (**137**), the system of traction-transmitting cables comprising at least a first cable (**167b**), for transmitting a first traction adapted to impart to the driven unit a movement in a first direction, and at least a second cable (**167d**), for transmitting a second traction to impart to the driven unit a movement in a second direction.

16. A conveyor of articles comprising at least one guide element (**135**) for guiding the articles along a transport path, and a positioning system of the guide element for positioning the guide element according to the spatial conformation of the transported articles, **characterised in that** the guide positioning system is realized according to any one of the preceding claims.
